# EUROPÄISCHE PATENTSCHRIFT

(11) **EP 0 779 627 B1**
(45) Veröffentlichungstag und Bekanntmachung des Hinweises auf die Patenterteilung: **09.02.2011**
(21) Anmeldenummer: 96119629.2
(22) Anmeldetag: 06.12.1996
(51) Int. Cl.: G21C 19/317, G21C 9/06

(54) **Vorrichtung zur Inertisierung der Atmosphäre in einem Kernkraftwerks-Containment**
Device for rendering inert the atmosphere in a nuclear power plant containment
Dispositif pour rendre inerte l'atmosphère dans un confinement d'une centrale nucléaire

(30) Priorität: 12.12.1995 DE 19546422
(43) Veröffentlichungstag der Anmeldung: 18.06.1997
(73) Patentinhaber: AREVA NP GmbH, 91052 Erlangen (DE)
(72) Erfinder: Eckardt, Bernd, Dipl.-Ing., 63486 Bruchköbel (DE)
(74) Vertreter: Tergau & Pohl Patentanwälte

(56) Entgegenhaltungen:
- EP-A- 0 019 907
- EP-A- 0 070 037
- EP-A- 0 466 052
- WO-A-91/20086

## Beschreibung

Die Erfindung betrifft eine Vorrichtung zur Inertisierung der Atmosphäre in einem Kernkraftwerks-Containment, zum Beispiel in einem Kernkraftwerk mit einem Druckwasserreaktor, in dem sich nach einem Störfall die Bildung eines explosiven Gasgemisches anbahnt, wobei beispielsweise Wasserstoff als einer der reaktiven Bestandteile vorhanden ist.

In Kernkraftwerken können bei bestimmten Störfällen, bei denen aufgrund von Kernaufheizung und Zirkoniumoxydation größere Mengen von Wasserstoffgas freigesetzt werden, explosive Gasgemische entstehen.

Zur Verhinderung der Bildung derartiger explosiver Gasgemische im Containment von Kernkraftwerken werden die verschiedensten Einrichtungen diskutiert. Hierzu gehören beispielsweise Einrichtungen wie katalytische Rekombinatoren, katalytisch und elektrisch betriebene Zündeinrichtungen, die Kombination der beiden vorgenannten Einrichtungen, permanente oder nachträgliche Inertisation und auch eine nachträgliche Inertisation mit gleichzeitiger Druckentlastung des Containments.

Zur Inertisation sind auch Verfahren bekannt, bei denen eine Flüssiggaseinspeisung über verzweigte Düsensysteme oder konventionelle Gaseinspeisesysteme mit integrierter Ölbrenner- oder Gasbrenner-Verdampferanlage vorgeschlagen sind. Andere Varianten basieren wiederum auf der Flüssigeinspeisung, wobei wegen der fehlenden Verdampfungsenergien in der Atmosphäre der Kernkraftwerke auch eine Einspeisung in einen Wassersumpf innerhalb des Reaktorsicherheitsbehälters vorgesehen ist. Nachteilig ist bei dieser Variante jedoch, daß je nach Störfallverlauf möglicherweise überhaupt kein Sumpf vorhanden ist und daß durch die Inertgasfreisetzung im tiefgelegenen Bereich des Reaktorsicherheitsbehälters eine starke Temperaturschichtung und eine sich daraus ergebende schichtweise und dadurch ungünstige Verteilung der Inertgase auftritt.

Diese bekannten Verfahren werden bislang wegen der ungünstigen Eigenschaften der Einspeisesysteme so negativ bewertet, daß bisher eine Anwendung nicht in Betracht gezogen worden ist. Dies zeigt auch sehr deutlich die Beschreibungseinleitung der Deutschen Offenlegungsschrift DE 39 27 958 A1.

EP-A-0019907 offenbart eine Vorrichtung mit den Merkmalen des Oberbegriffs des Anspruchs 1.

Der Erfindung liegt daher die Aufgabe zugrunde, eine Vorrichtung zu schaffen, mit der beim Auftreten eines Störfalls eine schnelle nachträgliche Inertisierung der Atmosphäre im Containment eines Kernkraftwerks sicher durchführbar ist.

Diese Aufgabe wird erfindungsgemäß mit einer Vorrichtung gelöst, die die Merkmale des Anspruchs 1 aufweist.

Zur Warnung des sich möglicherweise bei Auslösung der Inertisierung im Sicherheitsbehälter befindlichen Personals kann, insbesondere durch eine geeignete Formung von Einspeisekomponenten, bereits während des Einspeisevorgangs ein sehr lautes akustisches Signal erzeugt werden. Aufgrund der Auslegung der Inertisierungsvorrichtung, durch die wenigstens für einen Zeitraum von etwa 2 Minuten nach Auslösung der Inertgaseinspeisung noch ein ausreichend hoher O₂-Gehalt in der Atmosphäre des Kernkraftwerk-Containments sichergestellt ist, bleibt noch ausreichend Zeit für eine sichere Ausschleusung des Personals.

Zur weiteren Erhöhung der Sicherheit des Personals und zudem für eine zuverlässige Schnellinertisierung des Containments ist die Vorrichtung zur Inertisierung zweckmäßigerweise derart ausgelegt, daß bei Nutzung aller Austrittsöffnungen für eine Einspeisung des Inertgases der O₂-Gehalt in der Atmosphäre des Containments etwa nach 5 bis 15 Minuten kleiner als 17 Vol.% ist. Auch die zur Evakuierung zurückzulegenden Wegstrecken von aufgrund der räumlichen Ausdehnung des Containments etwa 100 m sind dabei für das Personal sicher überwindbar.

Gemäß der Erfindung ist vorgesehen, daß mindestens einige der Austrittsöffnungen als Düsen mit kegeligem Längsschnitt ausgestaltet sind. Nach vorteilhaften Weiterbildungen der Erfindung ist vorgesehen, daß mindestens einige Düsen trichterförmig aus annähernd ebenen Begrenzungsflächen geformt sind und einen rechteckigen Querschnitt mit einem Seitenverhältnis von 1 : 10 bis 1 : 40 aufweisen. Unabhängig von der speziellen Gestaltungsform der Düsen weisen diese erfindungsgemäß für einen aus ihnen austretenden Strahl des Inertgases eine Wurfweite auf, die größer ist als 50 % der größten Abmessung des Containments (von z.B. 50 m Durchmesser).

Gemäß einer weiteren Ausgestaltung der Erfindung erzwingen einige der Düsen eine Beschleunigung des Inertgases auf mehr als dessen Schallgeschwindigkeit oder sie sind als Venturidüsen ausgebildet. Zweckmäßigerweise ist der aus den Düsen austretende Strahl des Inertgases durch eine weitere Düse geführt und saugt am Eintritt in diese mindestens das 5-fache seines eigenen Volumens aus der Atmosphäre des Containments an. Dabei ist es zweckmäßig, wenn der Strahl des Inertgases beim Eintritt in die weitere Düse noch Überschallgeschwindigkeit hat. Die Düsen sind vorteilhafterweise derart ausgeführt, daß eine Doppelbenutzung im Falle einer möglicherweise erforderlichen Druckentlastung des Containments in der Art einer umgekehrten Durchströmung möglich ist. Hierbei ist die Auslegung derart, daß im reversen Betrieb etwa 1/10 des Venting- oder des Einspeisestromes mit einem Druckverlust von weniger als 1 bar abgeführt werden kann.

Nach weiteren Ausgestaltungsmerkmalen der erfindungsgemäßen Vorrichtung gewährleistet die Länge der weiteren Düse ein annähernd homogenes Gemisch aus Inertgas und angesogener Atmosphäre an ihrem Austrittsende. Die weitere Düse kann auf eine den sie umgebenden Raum abschließende Berstfolie gerichtet sein, die durch einen austretenden Gasgemischstrahl zerstörbar ist, wobei das Innere des Containments in eine Vielzahl von Kammern (Zellen) unterteilt ist, die durch die Berstfolien mindestens zwei Gruppen bilden, von denen die eine Gruppe weitere Düsen aufweist und deren zweite Gruppe im Normalbetrieb ohne besondere Maßnahme durch Servicepersonal begehbar ist.

Eine sehr vorteilhafte Weiterbildung der erfindungsgemäßen Vorrichtung besteht darin, dem Strahl aus Inert- und Atmosphärengas im Bereich der weiteren Düse fein zerstäubtes, noch unverdampftes Inertgas zuzuführen. Diesem kann ein Aerosol zugemischt sein, das einen Katalysator zur Oxydation von Wasserstoff enthält.

Es ist vorteilhaft, wenn das Inertgas in den zu den Düsen führenden Rohren einen Druck von mehr als 500 KPa aufweist oder in den Rohren Begrenzer zur Einstellung der Stärke des Inertgasstromes vorgesehen sind.

Zweckmäßig sind während der Einspeisung des Inertgases in das Containment lediglich diese Einspeisung ermöglichende Öffnungen in der Wandung des Containments geöffnet und ist dieses im übrigen hermetisch nach außen abgeschlossen.

Insbesondere aufgrund einer hohen Einspeiserate des Inertisierungsmittels sowie durch die zusätzliche Injektion von flüssigem Inertisierungsmittel im Hochgeschwindigkeitsbereich der Einspeiseeinrichtung wird eine besonders hohe Einspeiseleistung erreicht. Der Grund hierfür ist, daß durch hohe Relativgeschwindigkeitsunterschiede eine Feinstdispergierung und/oder eine Kristallbildung mit Verdampfung durch die Enthalpie aus der angesaugten Umgebungsatmosphäre erreicht wird. Dabei wirken sich eine große Wärmeübergangsfläche pro Tropfen oder Kristallmasse oder eine hochturbulente Strömung besonders günstig auf den Wärmeübergang aus.

Eine gezielte Flüssigkeitsinjektion ist in der Art einer Teillastregelung ermöglicht, indem in verschiedenen Höhen von einem Flüssigkeitsreservoir abgehende Injektionsleitungen vorgesehen sind. Eine bei der Einspeisung flüssigen Inertisierungsmittels möglicherweise auftretende Vereisung an einer Zuführungsleitung ist durch zweckmäßigerweise vorgesehene weitere Zuführungsleitungen kompensierbar.

Die erfindungsgemäße Vorrichtung ist sehr vorteilhaft, weil sie eine schnelle, erst beim Auftreten eines entsprechenden Störfalls aktivierbare Nachinertisierung des Containments eines Kernkraftwerkes ermöglicht, ohne dabei in diesem tätiges Servicepersonal zu gefährden. Durch eine Kombination der Vorrichtung mit einem katalytischen Rekombinator oder einem Zünder kann der vorhandene Wasserstoff - bei grundsätzlicher Vermeidung eines schnellen Verbrennungsvorganges - zudem völlig abgebaut werden.

Zudem ist mit einer derartigen Vorrichtung eine Deflagration, die zu einer Detonation führen könnte, sicher vermieden. Daher kann die Anzahl von Zündern, die aus Sicherheitsgründen vorgesehen sind, reduziert sein. So ist beispielsweise für ein Containment mit einem Volumen von etwa 50000 m³ eine sicherheitsgerichtete frühzeitige Zündung unabhängig von der Anzahl von Turbulenzgeneratoren bereits mit etwa 50, vorzugsweise etwa 10 - 20, Zündern gewährleistet.

Ein Ausführungsbeispiel der Erfindung wird anhand einer Zeichnung näher erläutert. Im einzelnen zeigen:
Fig. 1 ein Ausführungsprinzip einer erfindungsgemäßen Vorrichtung, und
Fig. 2 und 3 spezielle Düsenausführungen in größerem Maßstab.

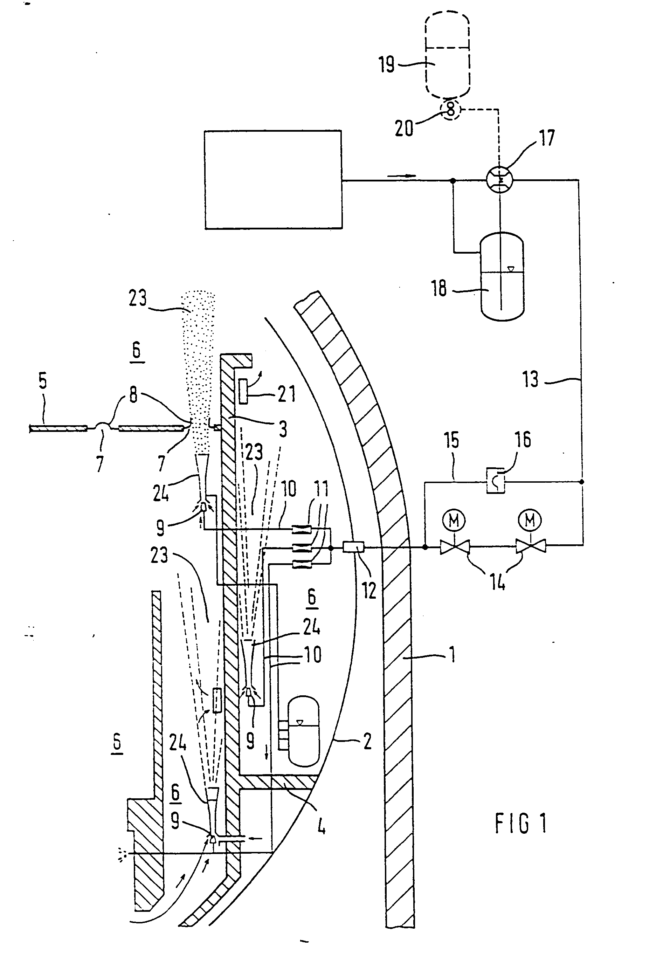

Ein Containment 1 (siehe Figur 1) eines Kernkraftwerkes, insbesondere eines mit einem Druckwasserreaktor ausgerüsteten Kernkraftwerkes umfaßt eine Sicherheitshülle 2, die durch Zwischenwände 3 und Böden 4 sowie Decken 5 in Kammern 6 unterteilt ist. In den Decken 5 und den Zwischenwänden 3 einiger Kammern sind Öffnungen 7 vorgesehen, die im Normalbetrieb des Kernkraftwerks durch je eine Berstfolie 8 verschlossen sind.

In den Kammern 6 sind nichtdargestellte Anlagenteile des Kernkraftwerks untergebracht. Die Kammern 6 sind außerdem in zwei Gruppen unterteilt, von denen die einer ersten Gruppe zugeordneten Kammern 6 während des Normalbetriebs mehr oder weniger regelmäßig von Servicepersonal begangen werden und deren der zweiten Gruppe zugeordnete Kammern im Normalbetrieb nicht betreten werden müssen. Zwischen den Kammern 6 der ersten und der zweiten Gruppe liegen die Öffnungen 7, die durch Berstfolien verschlossen sind.

In den Kammern der zweiten Gruppe vorgesehene Austrittsöffnungen 9 für ein Inertgas bilden die Enden von Inertgaszuführungsleitungen 10, die über Durchflußmengenbegrenzer 11 und eine Durchführung 12 in eine Inertgasleitung 13 angeschlossen sind. Die Inertgasleitung 13 ist durch zwei in Reihe geschaltete Motorventile 14 versperrbar. In einer Bypassleitung 15 zu den Motorventilen 14 liegt eine Berstscheibe 16.

In den Kammern 6 beider Gruppen sind katalytisch wirkende Rekombinatoren 21 angebracht, durch die unabhängig von äußeren Einflüssen freier Wasserstoff mit dem Sauerstoff der Containmentatmosphäre oxydiert wird.

Die Inertgasleitung 13 wird über ein Drosselventil oder eine Strahlpumpe 17 aus einer Verdampferanlage 18 mit Inertgas gespeist. Als Inertgas dient vorzugsweise Kohlendioxyd oder Stickstoff. Beispielsweise zur Steuerung von Temperatur und/oder Druck des Inertgases in der Inertgasleitung 13 wird das Inertgas im Bereich der Strahlpumpe 17 mit noch flüssigem Inertgas aus einem Zuspeisebehälter 18 gemischt.

Dem Inertgas wird außerdem ein katalytisches Aerosol beigemischt, durch das die Oxydation von möglicherweise in der Atmosphäre des Containments 1 vorhandenem Wasserstoff eingeleitet wird. Diese Katalytflüssigkeit kommt aus einem Speicher 19 und wird in einem Dispergierer 20 zu einem Aerosol aufbereitet, das dem Inertgas im Bereich der Strahlpumpe 17 beigemischt wird.

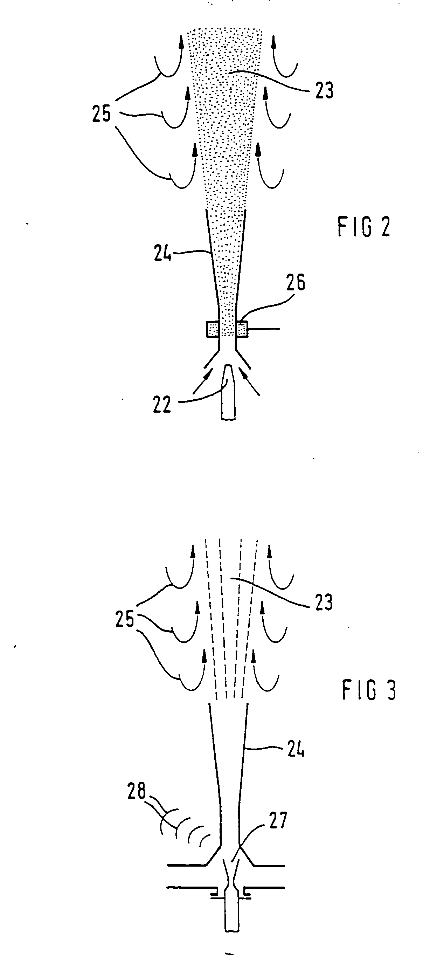

Fig. 2 zeigt eine als Düse 22 mit kegeligem Querschnitt ausgebildete Austrittsöffnung 9. Der Querschnitt der Düse 22 kann jedoch auch rechteckig sein mit einem Seitenverhältnis von 1 : 10 bis 1 : 40. Ein aus der Düse 22 abströmender Inertgasstrahl 23 trifft auf eine weitere Düse 24 und bildet zusammen mit dieser eine Strahlpumpe, die aus ihrer Umgebung Luft ansaugt und mit dem Inertgas mischt. Durch entsprechende Dimensionierung der Düsen 22 und 24 saugt der Inertgasstrahl 23 mindestens das 5-fache seinen eigenen Volumens an.

Die Mantelfläche der weiteren Düse 24 ist von einer Einspeisekammer 26 umfaßt, durch die, wie auch schon in der Strahlpumpe 17, nochmals noch flüssiges Inertgas in den Inertgasstrahl 23 einspeisbar ist.

Das noch flüssige Inertgas weist dabei eine im Vergleich zum Inertgasstrahl 23 wesentlich geringere Geschwindigkeit auf. Durch die hohe Relativgeschwindigkeitsdifferenz zwischen dem noch flüssigen Inertgas und dem Inertgasstrahl 23 wird dabei zusätzlich eine Feinsttropfendispergierung oder Kristallbildung begünstigt, wobei eine Verdampfung durch die Enthalpie aus der angesaugten Umgebungsatmosphäre erreicht wird. Somit ist die für eine Schnellinertisierung notwendige hohe Verdampfungsrate besonders effektiv erreichbar.

Der mit Luft vermischte Inertgasstrahl 23 verläßt die weitere Düse 24 immer noch mit hoher Geschwindigkeit, so daß er sich durch Turbulenzen 25 an seinem Außenbereich mit Umgebungsluft vermischt und in der Lage ist, eine Berstfolie 8 zu zerreißen. Insgesamt wird dadurch eine ebenso schnelle wie gründliche Vermischung des Inertgases mit der Umgebungsluft, also der Containmentatmosphäre, erzwungen.

Fig. 3 zeigt eine Austrittsöffnung 9, die nach Art einer Venturidüse 27 gestaltet ist und den Inertgasstrahl 23 zumindest über eine kurze Wegstrecke auf beispielsweise mehr als Schallgeschwindigkeit beschleunigt. Der aus der Venturidüse 27 austretende Strahl trifft wieder auf eine weitere Düse 24 und vermischt sich nach deren Verlassen in Turbulenzen 25 mit Umgebungsluft.

Sowohl bei der Anordnung nach Fig. 2 als auch nach der gemäß Fig. 3 erzeugt der aus der Düse 22 bzw. 27 austretende Inertgasstrahl ein durch Schallwellen 28 angedeutetes lautes Geräusch, durch das anwesendes Servicepersonal gewarnt und zum Verlassen des Containments veranlaßt wird. Ein sicheres Verlassen des Containments ist insbesondere dadurch gewährleistet, daß der O₂-Gehalt des Containments frühestens 2 Minuten nach Auslösung der Einspeisung kleiner ist als 17 Vol.%, so daß auch Wegstrecken von etwa 100 m sicher überwunden werden können.

### Bezugszeichenliste

- 1: Containment
- 2: Sicherheitshülle
- 3: Zwischenwand
- 4: Boden
- 5: Decke
- 6: Kammer in 2
- 7: Öffnung in 5
- 8: Berstfolie in 7
- 9: Austrittsöffnung
- 10: Inertgaszuführleitung für 9
- 11: Durchflußmengenbegrenzer in 10
- 12: Durchführung
- 13: Inertgasleitung (außerhalb 2)
- 14: Motorventil
- 15: Bypaßleitung
- 16: Berotscheibe in 15
- 17: Strahlpumpe
- 18: Zuspeisebehälter
- 19: Speicher
- 20: Dispergierer
- 21: Rekombinator
- 22: Düse
- 23: Inertgasstrahl
- 24: weitere Düse
- 25: Turbulenzen
- 26: Einspeisekammer
- 27: Venturidüse
- 28: Schallwelle

## Patentansprüche

1. Vorrichtung zur Inertisierung der Atmosphäre in einem Kehkraftwerks-Containment (1), in dem sich nach einem Störfall die Bildung eines explosiven Gasgemisches anbahnt, beispielsweise mit Wasserstoff als einem der reaktiven Bestandteile, wobei eine Vielzahl von strömungstechnisch parallel geschalteten Austrittsöffnungen (9) für ein Inertgas vorgesehen ist,
**dadurch gekennzeichnet,**
- dass mindestens einige der Austrittsöffnungen (9) als Düsen (22) mit kegeligem Längsschnitt ausgestaltet sind, und dass die Vorrichtung derart ausgelegt ist,
- dass die Strömungsgeschwindigkeit des Inertgases in den Austrittsöffnungen (9) größer als das 0,3-fache der Schallgeschwindigkeit dieses Gases ist, und
- dass bei Nutzung aller Austrittsöffnungen (9) für eine Einspeisung des Inertgases der O₂-Gehalt in der Atmosphäre des Containments frühestens nach ca. 2 Minuten kleiner als 17 Vol.% ist.

2. Vorrichtung nach Anspruch 1,
**dadurch gekennzeichnet,**
**dass** die Vorrichtung derart ausgelegt ist, dass bei Nutzung aller Austrittsöffnungen für eine Einspeisung des inertgases der O₂-Gehalt in der Atmosphäre des containments etwa nach 5 bis 15 Minuten kleiner als 17 Vol. % ist.

3. Vorrichtung nach Anspruch 1 oder 2,
**dadurch gekennzeichnet,**
**dass** die Vorrichtung derart ausgelegt ist, dass die Austrittsöffnungen (9) für einen Betrieb mit umgekehrter Durchströmung zur Druckentlastung des Kernkraftwerks-Containments (1) derart ausgelegt ist, dass im Betrieb mit umgekehrter Durchströmung etwa das 0,1-fache des Einspeisestromes bei einem Druckverlust von weniger als 1 bar abgeführt ist

4. Vorrichtung nach einem der Ansprüche 1 bis 3,
**dadurch gekennzeichnet,**
**dass** mindestens einige Düsen (22) trichterförmig aus annähernd ebenen Begrenzungsflächen geformt sind und einen rechteckigen Querschnitt mit einem Seitenverhältnis 1:10 bis 1:40 haben.

5. Vorrichtung nach einem der Ansprüche 1 bis 4,
**dadurch gekennzeichnet,**
**dass** einige Düsen (22) derart ausgelegt sind, dass sie eine Beschleunigung des Inertgases auf mehr als dessen schallgeschwindigkeit erzwingen oder als Venturidüsen ausgebildet sind.

6. Vorrichtung nach einem der Ansprüche 1 bis 5,
**dadurch gekennzeichnet,**
**dass** das aus einer Düse (22,27) als Strahl (23) austretende Inertgas durch eine weitere Düse (24) geführt ist und am Eintritt in diese mindestens das 5-fache seines eigenen Volumens aus der Atmosphäre des Containments (1) ansaugt.

7. Vorrichtung nach Anspruch 6,
**dadurch gekennzeichnet,**
**dass** der Strahl (23) des Inertgases beim Eintritt in die weitere Düse (24) Überschallgeschwindigkeit hat.

8. Vorrichtung nach Anspruch 6 oder 7,
**dadurch gekennzeichnet,**
**dass** die Länge der weiteren Düse (24) ein annähernd homogenes Gemisch aus Inertgas und angesogener Atmosphäre an ihrem Austritt gewährleistet.

9. Vorrichtung nach einem der Ansprüche 6 bis 8, mit einer stromabwärts der weiteren Düse (24) angeordneten, den sie umgebenden Raum abschließende Berstfolie (8),
**dadurch gekennzeichnet,**
**dass** die weitere Düse (24) auf die Berstfolie (8) gerichtet ist, die durch einen austretenden aus der weiteren Düse (24) Gasgemischstrahl (23) zerstörbar ist.

10. Vorrichtung nach einem der Ansprüche 6 bis 9,
**dadurch gekennzeichnet,**
**dass** dem Strahl (23) aus Inert- und Atmosphärengas im Bereich (26) der weiteren Düse (24) fein zerstäubtes noch unverdampftes Inertgas zugeführt ist.

11. Vorrichtung nach einem der Ansprüche 1 bis 10,
**dadurch gekennzeichnet,**
**dass** die Vorrichtung derart ausgelegt ist, dass Inertgas in zu den Düsen (22,27) führenden rohren (10) einen Druck von mehr als 500 kPa (5 bar) aufweist.

12. Vorrichtung nach einem der Ansprüche 1 bis 11,
**dadurch gekennzeichnet,**
**dass** in den zu den Düsen (22, 27) führenden Rohren (10) Begrenzer (11) zur Einstellung der Durchflußmenge des Inertgasstromes vorgesehen sind.

13. Vorrichtung nach einem der Ansprüche 1 bis 12,
**dadurch gekennzeichnet,**
**dass** dem Inertgas ein Aerosol zugemischt ist, das einen Katalysator zur Oxydation von Wasserstoff enthält.

14. Kernkraftwerks-Containment (1) mit einer Anzahl von Vorrichtungen zur Inertisierung der Atmosphäre nach einem der Ansprüche 1 bis 12, **dadurch gekennzeichnet,**
**dass** die Düsen (22) eine Wurfweite für einen aus ihnen austretenden Strahl (23) des Inertgases von mehr als 50 % der größten Abmessung des Containments (1) aufweisen.

15. Kernkraftwerks-Containment (1) mit einer Anzahl von Vorrichtungen zur Inertisierung der Atmosphäre nach Anspruch 9,
**dadurch gekennzeichnet,**
**dass** das Innere des Containments (1) in eine Vielzahl von Kammern (6) unterteilt ist, die durch die Berstfolien (8) mindestens zwei Gruppen bilden, von denen die eine Gruppe weitere Düsen (24) aufweist.

16. Kernkraftwerks-Containment (1) mit einer Anzahl von Vorrichtungen zur Inertisierung der Atmosphäre nach einem der Ansprüche 1 bis 13,
**dadurch gekennzeichnet,**
**dass** das Containment (1) derart ausgelegt ist, dass während der Einspeisung des Inertgases lediglich hierzu dienende Öffnungen (12) in
dem Containment 81) geöffnet sind, und dass das Containment im übrigen hermetisch nach außen abgeschlossen ist.

## Claims

1. A device for inerting the atmosphere in a nuclear power plant containment (1) in which, after a hazardous incident, an explosive gas mixture is forming, hydrogen, for example, being one of the reactive components, and in which a multitude of exit openings (9), fluidically connected in parallel, for an inert gas are provided, **characterized in**
- **that** at least some of the exit openings (9) are designed as nozzles (22) with conical longitudinal section and
- **that** the device is designed such that the velocity of flow of the inert gas in the exit openings (9) is higher than 0.3 times the speed of sound of this gas, and
- **that**, when using all exit openings (9) for feeding the inert gas, the O₂ content in the atmosphere of the containment will be lower than 17 % by volume at the earliest after about 2 minutes.

2. The device of claim 1,
**characterized in**
**that** the device is designed such that, when using all exit openings (9) for feeding the inert gas, the O₂ content in the atmosphere of the containment will be lower than 17 % by volume after about 5 to 15 minutes.

3. The device of claim 1 or 2,
**characterized in**
**that** the device is designed such that the exit openings (9) are designed, for an operation with reversed through-flow for pressure relief of the nuclear power plant containment (1), in such a way that in operation with reversed through-flow, about 0.1 times the feeding flow can be discharged with a pressure drop of less than 1 bar.

4. The device of any of claims 1 to 3,
**characterized in**
**that** at least some nozzles (22) are formed from approximately flat periphery surfaces in the shape of a funnel and have a rectangular cross-section with a length-width ratio of 1:10 to 1:40.

5. The device of any of claims 1 to 4,
**characterized in**
**that** some nozzles (22) are designed such that they force an acceleration of the inert gas to more than the latter's speed of sound, or that they are designed as venturi tubes.

6. The device of any of claims 1 to 5,
**characterized in**
**that** the inert gas escaping from a nozzle (22, 27) as a jet (23) is guided through an additional nozzle (24) and, when entering thereinto, sucks at least 5 times its own volume from the atmosphere of the containment (1).

7. The device of claim 6,
**characterized in**
**that** the jet (23) of inert gas, when entering into the additional nozzle (24) has supersonic speed.

8. The device of claim 6 or 7,
**characterized in**
**that** the length of the additional nozzle (24) guarantees an approximately homogeneous mixture of inert gas and sucked atmosphere at its exit.

9. The device of any of claims 6 to 8, having a burst foil (8) arranged downstream of the additional nozzle (24) and closing the space surrounding it,
**characterized in**
**that** the additional nozzle (24) is directed onto the burst foil (8), which can be destroyed by a jet (23) of gas mixture emerging from the additional nozzle (24).

10. The device of any of claims 6 to 9,
**characterized in**
**that** finely atomized, still unvaporized inert gas is fed to the jet (23) of inert gas and atmospheric gas in the area (26) of the additional nozzle (24).

11. The device of any of claims 1 to 10,
**characterized in**
**that** the device is designed such that inert gas in pipes (10) leading to the nozzles (22, 27) has a pressure of more than 500 kPa (5 bars).

12. The device of any of claims 1 to 11,
**characterized in**
**that** in the pipes (10) leading to the nozzles (22, 27), limiters (11) for adjusting the flow rate of the inert gas flow are provided.

13. The device of any of claims 1 to 12,
**characterized in**
**that** an aerosol containing a catalyst for the oxidation of hydrogen is added to the inert gas.

14. A nuclear power plant containment (1) with a number of devices for inerting the atmosphere according to any of claims 1 to 12,
**characterized in**
**that** the nozzles (22) have a length of throw of a jet (23) of the inert gas emerging therefrom of more than 50 % of the largest dimension of the containment (1).

15. A nuclear power plant containment (1) with a number of devices for inerting the atmosphere according to claim 9,
**characterized in**
**that** the interior of the containment (1) is subdivided into a multitude of chambers (6) which through the burst foils (8) form at least two groups, one of said groups including additional nozzles (24).

16. A nuclear power plant containment (1) with a number of devices for inerting the atmosphere according to any of claims 1 to 13,
**characterized in**
**that** the containment (1) is designed such that during feeding of the inert gas,
exclusively openings (12) serving for that purpose are opened in the containment (1), and that the containment, as for the rest, is hermetically sealed against the outside.

## Revendications

1. Dispositif pour inertiser l'atmosphère dans un confinement (1) d'une centrale nucléaire dans laquelle se forme, après un incident dangereux, un mélange de gaz explosif, hydrogène, par exemple, étant l'un des composants réactifs, et dans laquelle est prévue une multiplicité d'ouvertures de sortie (9), connectées en parallèle du point de vue de la technique des fluides, pour un gaz inerte, **caractérisé**
- **en ce qu'**au moins quelques unes des ouvertures de sortie (9) sont réalisées comme des buses (22) avec coupe longitudinale conique et
- **en ce que** le dispositif est réalisé de façon à ce que la vitesse d'écoulement du gaz inerte dans les ouvertures de sortie (9) est plus haute que 0,3 fois la vitesse du son de ce gaz et
- **en ce que**, si l'on utilise toutes les ouvertures de sortie (9) pour introduire le gaz inerte, la teneur en O₂ dans l'atmosphère du confinement sera moins de 17 % volumétriques après environ 2 minutes au plus tôt.

2. Dispositif selon la revendication 1,
**caractérisé**
**en ce que** le dispositif est réalisé de façon à ce que, si l'on utilise toutes les ouvertures de sortie (9) pour introduire le gaz inerte, la teneur en O₂ dans l'atmosphère du confinement sera moins de 17 % volumétriques après environ 5 à 15 minutes.

3. Dispositif selon la revendication 1 ou 2,
**caractérisé**
**en ce que** le dispositif est réalisé de façon à ce que les ouvertures de sortie (9) sont réalisées, pour un fonctionnement avec passage inverse pour une décompression du confinement (1) de la centrale nucléaire, de façon à ce que, en fonctionnement avec écoulement inverse, environ 0,1 fois le flux d'alimention peut être évacué avec une chute de pression de moins de 1 bar.

4. Dispositif selon l'une quelconque des revendications 1 à 3,
**caractérisé**
**en ce qu'**au moins quelques unes des buses (22) sont formées de surfaces périphériques approximativement planes de la forme d'un entonnoir et ont une coupe transversale rectangulaire avec un rapport de la longueur à la largeur de 1:10 à 1:40.

5. Dispositif selon l'une quelconque des revendications 1 à 4,
**caractérisé**
**en ce que** quelques unes des buses (22) sont réalisées de façon à ce qu'elles forcent une accélération du gaz inerte à plus de la vitesse du son de ce dernier, ou en ce qu'elles sont réalisées comme tubes de Venturi.

6. Dispositif selon l'une quelconque des revendications 1 à 5,
**caractérisé**
**en ce que** le gaz inerte sortant d'une buse (22, 27) comme un jet (23) est conduit à travers une buse additionnelle (24) et, lorsqu'il entre dans cette dernière, aspire
au moins 5 fois son propre volume de l'atmosphère du confinement (1).

7. Dispositif selon la revendication 6,
**caractérisé**
**en ce que** le jet (23) de gaz inerte, lorsqu'il entre dans la buse additionnelle (24) a une vitesse supersonique.

8. Dispositif selon la revendication 6 ou 7,
**caractérisé**
**en ce que** la longueur de la buse additionnelle (24) garantit un mélange approximativement homogène de gaz inerte et d'atmosphère aspirée à sa sortie.

9. Dispositif selon l'une quelconque des revendications 6 à 8, ayant une feuille d'éclatement (8) ménagée en aval de la buse additionnelle (24) et fermant l'espace que l'entoure,
**caractérisé**
**en ce que** la buse additionnelle (24) est dirigée vers la feuille d'éclatement (8), qui peut être détruite par un jet (23) de mélange de gaz sortant de la buse additionnelle (24).

10. Dispositif selon l'une quelconque des revendications 6 à 9,
**caractérisé**
**en ce que** du gaz inerte finement atomisé, encore non évaporé est alimenté au jet (23) de gaz inerte et de gaz atmosphérique dans la zone (26) de la buse additionnelle (24).

11. Dispositif selon l'une quelconque des revendications 1 à 10,
**caractérisé**
**en ce que** le dispositif est réalisé de façon à ce que du gaz inerte dans des tubes (10) menant aux buses (22, 27) a une pression de plus de 500 kPa (5 bars).

12. Dispositif selon l'une quelconque des revendications 1 à 11,
**caractérisé**
**en ce que** des limiteurs (11) pour régler le débit de passage du flux de gaz inerte sont prévus dans les tubes (10) menant aux buses (22, 27).

13. Dispositif selon l'une quelconque des revendications 1 à 12,
**caractérisé**
**en ce qu'**un aérosol contenant un catalyseur pour l'oxydation d'hydrogène est ajouté au gaz inerte.

14. Confinement (1) d'une centrale nucléaire avec un nombre de dispositifs pour inertiser l'atmosphère selon l'une quelconque des revendications 1 à 12,
**caractérisé**
**en ce que** les buses (22) ont une longueur de projection d'un jet (23) du gaz inerte sortant de dites buses de plus de 50 % de la dimension la plus grande du confinement (1).

15. Confinement (1) d'une centrale nucléaire avec un nombre de dispositifs pour inertiser l'atmosphère selon la revendication 9,
**caractérisé**
**en ce que** l'intérieur du confinement (1) est divisé en une multiplicité de chambres (6) qui par les feuilles d'éclatement (8) forment au moins deux groupes, l'un de des groupes comprenant des buses additionnelle (24).

16. Confinement (1) d'une centrale nucléaire avec un nombre de dispositifs pour inertiser l'atmosphère selon l'une quelconque des revendications 1 à 13,
**caractérisé**
**en ce que** le confinement (1) est réalisé de façon à ce que, pendant l'alimentation du gaz inerte, exclusivement des ouvertures (12) servant à cette fin sont ouvertes dans le confinement (1), et en ce que le reste du confinement est fermé hermétiquement contre l'extérieur.
